# EUROPEAN PATENT SPECIFICATION

(11) **EP 1 981 383 B1**
(45) Date of publication and mention of the grant of the patent: **02.03.2011**
(21) Application number: 07704899.9
(22) Date of filing: 15.01.2007
(51) Int. Cl.: A47J 43/07

(54) **FOOD PROCESSOR ARRANGEMENTS**
KÜCHENMASCHINENANORDNUNGEN
AGENCEMENTS DE ROBOT CULINAIRE

(30) Priority: 07.02.2006 GB 0602379
(43) Date of publication of application: 22.10.2008
(73) Proprietor: Kenwood Limited, Havant, Hampshire PO9 2NH (GB)
(72) Inventor: CLARK, Simon, Hampshire P09 2NH (GB); GOODRICK-MEECH, Christina, Hampshire P09 2NH (GB)
(74) Representative: Marsh, Robin Geoffrey
(86) International application number: PCT/GB2007/000084
(87) International publication number: WO 2007/091014

(56) References cited:
- EP-A1- 0 561 259
- FR-A1- 2 651 982
- US-A- 5 799 567

## Description

This invention relates to food processor arrangements, and it relates more particularly to such arrangements for increasing the usefulness of such appliances by providing them with additional capabilities.

Food processing appliances are well known and established as useful and reasonably priced kitchen appliances with a reasonably broad range of capabilities. Because of design constraints, some of which have their origins in the pricing structure which has become established for such appliances, however, food processors do not tend to exhibit the broadly-based functionality of the more expensive stand-mixers.

It is thus desirable to increase the functionality of food processors without substantially increasing their price to the end-user.

It is also generally the case that, when a food processor is used in the kitchen to prepare ingredients for a recipe, other kitchen equipment, such as weighing scales, have to be utilised to proportion the ingredients correctly. This tends to cause clutter on the work-top as a user prepares the ingredients, and also can create a problem of storing the various pieces of equipment when they are not in use.

Prior proposals, for example those described in EP-A1-1 647 217, have been made for incorporating additional equipment, such as weighing scales, into food processors, but the present invention aims to achieve such incorporation economically and to provide reliable operation of the appliance at reasonable cost and with the components of the incorporated equipment distributed to advantage around a particularly advantageous drive system to provide a compact arrangement with a bowl-supporting platform disposed at a beneficially low operating position.

Another prior art food processor arrangement is shown in FR 2 651 982 A1.

According to the invention there is provided a food processor arrangement comprising a casing containing an electric motor and an associated drive system coupled to at least one drive outlet located on a bowl-supporting platform of said casing and capable of driving in rotation a food processing tool disposed within said bowl, wherein said casing comprises a pair of transverse rails disposed close to the base of the food processor and bearing its entire weight, with each rail member being mounted directly to a pair of standing feet of the food processor arrangement; the arrangement further including at least one load cell mounted upon each said rail; the load cells being disposed and configured to support the food processor and generate electrical signals indicative of weight sensed thereby, processing means for processing said signals to generate further electrical signals indicative of a weight of ingredients in said bowl and display means for utilising said further electrical signals to provide a visual indication of said weight of ingredients; the drive system being disposed with lower components thereof suspended between said rails, thereby permitting said bowl-supporting platform to be provided at a lower operational height, relative to a surface supporting said standing feet, than would have been possible were the entire drive system mounted above said rails.

By this means a stable arrangement is provided, with a usefully low operating platform for user convenience.

In one embodiment of the invention, the standing weight of the food processor is subtracted from the weight of the food processor plus the ingredients, thereby calculating the weight of the ingredients.

Preferably said display mean includes an LCD display.

It is further preferred that said drive system provides inner and outer coaxial drive outlets exposed at said platform and operative at different speeds.

In preferred embodiments, the drive system comprises an active limb incorporating said electric drive motor, and a shaft, driven by the motor and coupled to the inner drive outlet, to drive it at a selected speed.

Preferably, the system further includes a passive limb incorporating a rotary component; the active and passive limbs being mounted in fixed relationship to one another.

A first speed reduction mechanism is preferably provided to couple the motor-driven shaft to the rotary component of the passive limb and it is further preferred that a second speed reduction mechanism is provided to couple the rotary component to said outer drive outlet.

The rotary component may conveniently comprise a further shaft, disposed substantially parallel to the driven shaft of the motor, and it is preferred that both limbs of the system are rigidly mounted to, and supported by, a common framework of support members.

Both speed reduction mechanisms may conveniently be belt driven, and they may, if desired, provide identical speed reductions.

Preferably, respective load cells are deployed substantially centrally of the two rails and are mounted atop the respective rails so as to sense the weight supported thereby.

It is particularly preferred that the load cells incorporate strategically deployed strain gauges comprised of resistors formed upon strain-sensitive regions of a beam body and connected into a bridge circuit; whereby the load can be measured by detecting the changes of resistance of the various resistors with variations in the loading applied to the beam.

Conveniently, each load cell has associated therewith a respective load cell frame, typically made of ABS, and upon the upper surfaces of which the appliance is supported.

In such circumstances, it is preferred that each load cell is mounted directly to the underside of its respective load cell frame, and is mounted to the upper surface (in use) of its respective rail by means including a respective load cell stand of relatively small area.

It is further preferred that the load cells are formed with linked, transversely extending apertures, disposed to promote flexure of the load cell structure in the regions thereof at which the strain gauge resistors are deployed; some resistors being flexed in compression and some in extension to maximise the unbalance potentials exhibited by the bridge circuit, and hence the electrical output signals derivable from the cells.

Certain embodiments of the invention are intended to provide a weighing function only when the motor is stationary. In such circumstances, it is preferred that the display is blanked, or provided with a suitable message or graphic, when the motor is energised.

In arrangements according to the invention and capable of providing a weighing function whilst the motor is running, it is sometimes preferred to provide means, such as piezoelectric or other sensors associated with one or more of the feet of the appliance, to detect out-of-balance forces, and to generate compensatory electrical signals, indicative of the detected out-of-balance forces, to permit electronic stabilisation processing to be effected upon the weighing signals.

In order that the invention may be clearly understood and readily carried into effect, certain embodiments thereof will now be described, by way of example only, with reference to the accompanying drawings, of which:
Figure 1 shows, in general perspective view, one example of a typical food processor;
Figure 2 shows in general perspective view, another example of a typical food processor;
Figure 3 shows an underside view of a processor of the kind shown in Figure 2, to illustrate certain components of an arrangement in accordance with one example of the invention;
Figure 4 shows details of load cells and associated components utilised in the exemplary embodiment of Figure 3; and
Figure 5 shows analogue processing circuits utilised to process electrical signals derived from the load cells;

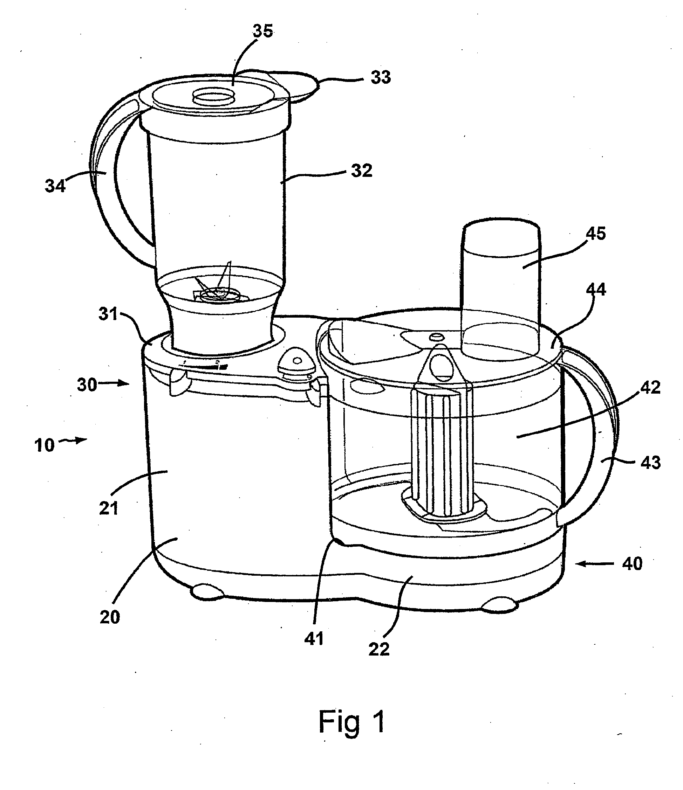

Referring now to Figure 1, there is shown an example of a food processor which can advantageously host an arrangement in accordance with an embodiment of the invention.

The food processor 10 shown in Figure 1 includes a casing 20 which, as is well known, houses an electric motor (not shown) and a drive system (not shown) disposed and arranged to provide rotational drive outputs for use with a blender section 30 and a food processor section 40.

The blender section 30 comprises a relatively high platform 31, atop the part 21 of the casing 20 which houses the motor; the platform having associated therewith a relatively high speed drive outlet, typically running at the operational speed of the motor and configured to drive a rotary tool located in the base of a goblet 32. The goblet 32 is formed, as is known, with a spout 33 and a handle 34, and it is capped by a removable lid 35. An interlock system is normally provided to prevent operation of the motor unless the lid 35 is correctly attached to the goblet 32.

The food processor section 40 comprises a relatively low platform 41 beneath which, and within a lower part 22 of the casing 20, are provide elements of a speed-reduction system, linked to the motor, which provides, centrally of the platform 41, a relatively lower speed drive outlet capable of rotating cutting, chopping and other tools inserted into a bowl 42. The bowl 42 has a handle 43, a lid 44 and a feed-tube 45 through which ingredients can be added to the bowl whilst the motor is running, provided that the lid 44 is in place on the bowl 42.

Usually, the dimensions of the feed tube 45 are configured so as to prevent insertion of a user's hands or fingers into the bowl therethrough, at least to within touching distance of the rotating tool. Some food processors, however, utilise a wide feed-tube to allow the addition of relatively large ingredients to the bowl. Such wide feed-tubes are provided with further interlocks to protect the user; such further interlocks usually being based around the detection of a pushing device in correct placement in the tube, whereby the user has to employ the pushing device to urge ingredients into the bowl 42, and the motor will not run unless the pushing device is located in the feed-tube.

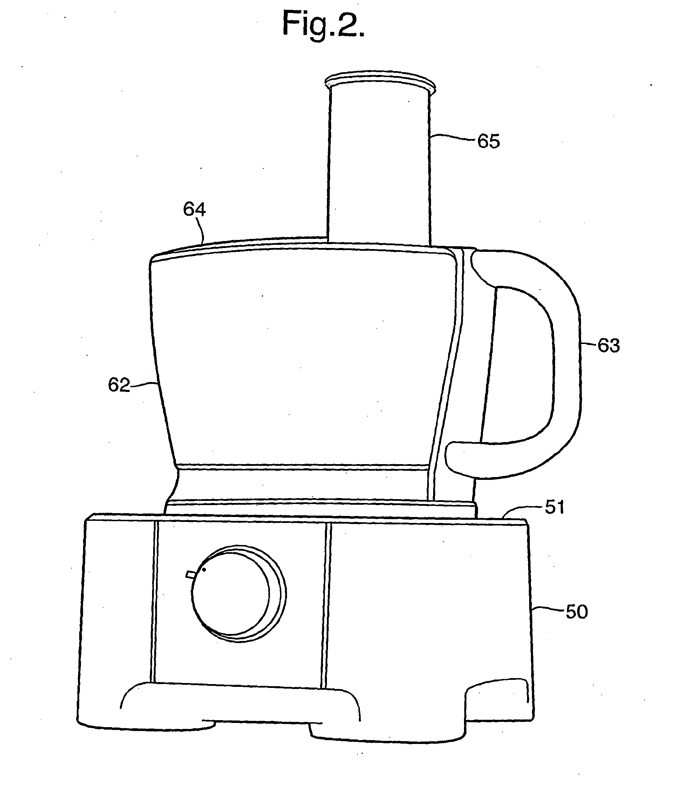

The present invention can be advantageously applied to food processors of varying kinds, such as (by way of example only) the kind shown in Figure 1 and that shown in Figure 2, wherein a box-like casing 50 supports a single platform 51 which can support and drive (by way of coaxially located drive outlets, as is known) rotary tools comprised in either a blender goblet (not shown) or a food processor bowl 62. The bowl 62 has a handle 63, a lid 64 and a feed-tube 65, similar to the components 43, 44 and 45 of the processor bowl described with reference to Figure 1, and to which similar comments apply.

The invention provides an arrangement whereby, whichever form of processor is used, the total weight of the appliance is determined by a plurality of weighing devices, such as strain gauges, strategically positioned within the appliance. Electronic circuitry and associated software is provided so that, when ingredients are added to the bowl 42 or 62, the standing weight of the appliance is subtracted from the weight of the appliance plus the ingredients, thereby calculating the weight of the ingredients, which is displayed visually to the user, preferably on an LCD display.

A preferred embodiment of the invention comprises an arrangement incorporated into a food processor of the kind described with reference to Figure 2, and the remaining portion of this specification is drawn to such an arrangement although as previously stated, the invention can be utilised with various forms of food processor.

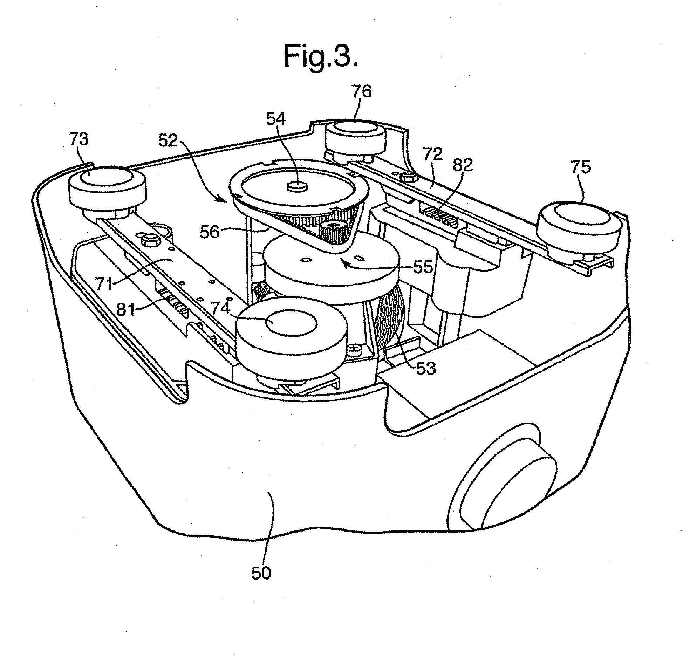

Referring now to Figure 3, there is shown an underside view of the casing 50 of a food processor of the kind shown in Figure 2, with the base cover moulding removed to reveal certain internal components material to the invention.

Within the casing 50 are mounted the elements of a drive system 52 of the kind shown, described and claimed in our European Patent No. EP1166427-B1, the disclosure of which is incorporated herein by reference. This drive system provides inner and outer coaxial drive outlets (not shown) exposed at the platform 51 and operative at different speeds, for the purposes mentioned with reference to Figure 2. The system 52 comprises an active limb, which incorporates an electric drive motor, shown in part at 53, and a shaft, driven by the motor and coupled to the inner drive outlet, to drive it at a selected speed. The system 52 also includes a passive limb, which incorporates a rotary component 54; the two limbs being mounted in fixed relationship to one another. A first speed reduction mechanism 55 couples the shaft to the rotary component 54 of the passive limb and a second speed reduction mechanism (not shown) couples the rotary component 54 to the outer drive outlet. As deployed within the casing 50, in this embodiment of the invention, the rotary component 54 comprises a further shaft, disposed substantially parallel to the driven shaft of the motor, and both limbs of the system are rigidly mounted to, and supported by, a common framework of support members. Both speed reduction mechanisms are typically belt driven, as shown at 56, and they may, if desired, provide identical speed reductions.

Drive systems of the kind just described are extremely robust and exhibit several beneficial operational characteristics, including freedom from vibration and the capability of being built with an extremely short length, measured along the operational axis of the motor drive shaft. This latter characteristic translates into the provision of the platform 51 at a beneficially low operating height above a work surface supporting the appliance. Such low operating heights are valuable from the standpoint of user convenience and the stability of the food processor as a whole.

The use of the drive system 52 within the casing 50 permits its low-slung deployment as shown in Figure 3, with its lower components suspended between a pair of parallel transverse rails 71 and 72 which bear the entire weight of the appliance and are mounted directly to the standing feet 73, 74, 75 and 76 of the appliance.

This configuration permits the deployment of respective load cells 81 and 82 centrally of the two rails 71 and 72; the cells 81 and 82 being mounted atop the respective rails, and being disposed so as to sense the weight supported by the rails which, as aforesaid, is the entire weight of the appliance. The load cells 81 and 82 incorporate; as is well known, strategically deployed strain gauges comprised of resistors formed upon strain-sensitive regions of a beam body and connected into a bridge circuit; the load being measured by detecting the changes of resistance of the various resistors with variations in the loading applied to the beam. Such load cells are described in detail, for example, in US-4432247-B1, to which reference is invited for further manufacturing and constructional detail.

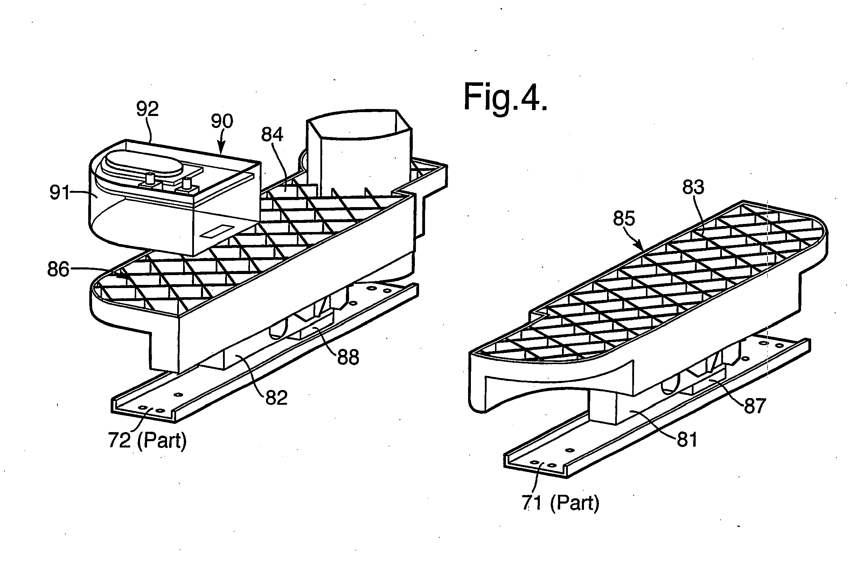

In this embodiment of the invention, as now to be additionally described with reference to Figure 4, each load cell 81, 82, has associated therewith a respective load cell frame 83, 84, typically made of ABS, and upon the upper surfaces 85, 86 of which the appliance is supported. Each load cell is mounted directly to the underside of its respective load cell frame, and is mounted to the upper surface (in use) of its respective transverse rail 71 or 72 by means of a respective load cell stand 87, 88 of relatively small area. As is well known, and as is described in the aforementioned United States Patent, the load cells are formed with linked, transversely extending apertures, disposed to promote flexure of the load cell structure in the regions thereof at which the strain gauge resistors are deployed; some resistors being flexed in compression and some in extension to maximise the unbalance potentials exhibited by the bridge circuit, and hence the electrical output signals derivable from the cells.

The load cells and their associated frames have significant height dimensions; typically in the order of 65 mm. It can thus be seen that it is extremely beneficial to mount them in the manner shown in Figures 3 and 4, whereby they flank the low-slung drive system and are mounted atop rails which are disposed very close to the base of the appliance.

In terms of typical dimensions, the load cell frames 83 and 84 have, in one example, respective heights of 40.0mm and 60mm; lengths of 210.0mm and 214.7mm; and widths of 57.0mum and 62.0mm. The rails 71 and 72 are typically of height 4.5mm; length 180.0mm; width 30.0mm; and thickness 1.5mm. Typical dimensions for the load cell stands 87 and 88 are: height 4.0mm; length 24.0mm; and width 13.0mm, and typically these components are formed of ABS.

Associated with the load cell frame 84 is an electronics pack 90 including a PCB casing 91, within which are mounted some at least of the electronic components utilised to process the electrical output signals from the strain gauges of the load cells 81 and 82 to compensate for the basic weight (tare) of the appliance and to provide signals indicative of the weight of ingredients added to a bowl such as 62 placed operatively upon the platform 61 of the appliance. An LCD display portion is disposed within a pad 92 associated with the casing 91, or otherwise disposed to provide a visual output capable of displaying, at a convenient location on the casing 50 for viewing by a user, the weights of ingredients added to the bowl.

In this embodiment of the invention, it is intended that the weighing function is effective only when the motor is stationary (so-called "static" weighing). The display is thus blanked, or provided with a suitable message or graphic when the motor is energised. As mentioned previously, however, the drive system 52 is capable of operating with extremely low vibration levels, and thus "dynamic" weighing, i.e. operation of the weighing function whilst the motor is running, can be provided if desired. In the event that, despite the low vibration running characteristics of the drive system 52, the provision of an accurate dynamic weighing function is rendered difficult as a result of operational characteristics, however, it is envisaged that out-of-balance forces may be detected by one or more suitable sensors such as (for example) piezoelectric sensors which may conveniently be associated with one or more of the feet of the appliance, and used to generate compensatory electrical signals, indicative of the detected out-of-balance forces, which are fed into the electronic circuitry to permit electronic stabilisation processing to be effected upon the weighing signals, thereby permitting, or improving, the operation of a dynamic weighing function.

Typical specification points for an arrangement capable of performing a static weighing and display function include the following:
1. Weighing capacity: 2.5Kg
2. Resolution: 1g
3. Accuracy:5%
4. Tare repeatability: 1g
5. Maximum time constant: 0.2s
6. Display: Backlit LCD with 4 digits, character height 10mm

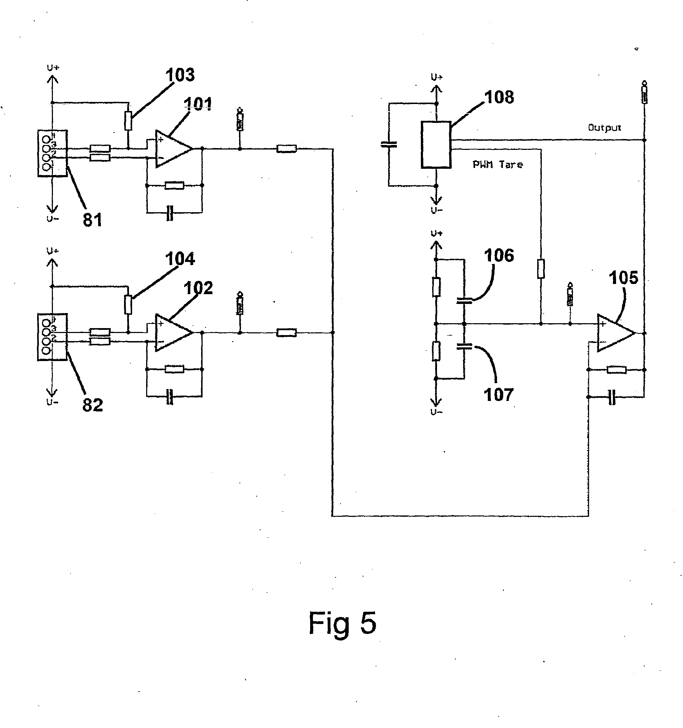

Analogue electronics, typically incorporated into the PCB casing 91, and utilised to amplify and measure the signals from the load cells, are shown in Figure 5.

Two operational amplifiers 101 and 102 are configured to form individual first stage differential amplifiers for electrical signals derived from the bridge arrangements of resistors in the load cells 81 and 82. Resistors 103 and 104 are biasing resistors dimensioned to give a nominal 0 output (0.5Vdd) for an unloaded appliance. The appliance itself weighs in the region of 6 to 8Kg, depending upon specification and thus, without these biasing resistors, which typically have resistance values in the order of 2 MΩ, the available signal range would be severely limited.

The output of the first stage amplifiers 101 and 102 is summed and amplified again by a third operational amplifier 105. For this final stage an inverting configuration is used and the reference voltage is adjusted for the tare function. This ideally is a smooth analogue voltage but, as most microcontrollers do not have a digital-to-analogue output conversion function built in, this is achieved in the present example by the use of a pulse-width-modulated (PWM) output from a microcontroller 108 which PWM signal is smoothed by capacitors 106 and 107. The output of amplifier 105 is sent to an analogue-to-digital converter in the microcontroller 108 to be converted into a digital representation of the applied weight.

In most cases of electronic scales the tare (zero) function is accomplished by subtracting the measured value when tared from the actual measured signal to give the difference; a procedure which can lead to a dynamic range problem. For this reason, an offset is added in hardware. This is achieved by feeding the PWM output into the reference signal for the final operational amplifier 105 (after suitable smoothing). Then by adjusting the PWM output a nominal zero voltage can be achieved for any load and so the full dynamic range is maintained. As this will only give a relatively coarse adjustment, once set the traditional tare function is used to fine tune the result. A simple successive approximation method is used to set the correct PWM output.

It will be appreciated that software typically controls the various sampling and processing operations, and that such software is readily available, or can readily be adapted or devised, for use in arrangements intended to function in accordance with any chosen operational configuration.

## Claims

1. A food processor arrangement comprising a casing (20; 50) containing an electric motor and an associated drive system coupled to at least one drive outlet located on a bowl-supporting platfom (41; 51) of said casing (20; 50) and capable of driving in rotation a food processing tool disposed within said bowl (42; 62), wherein said casing (20; 50) comprises a pair of transverse rails (71; 72) disposed close to the base of the food processor and bearing its entire weight, with each rail (71; 72) being mounted directly to a pair of standing feet (73, 74, 75, 76) of the food processor arrangement; the arrangement further including at least one load cell (81, 82) mounted upon each said rail (71, 72); the load cells (81, 82) being disposed and configured to support the food processor and generate electrical signals indicative of weight sensed thereby, processing means for processing said signals to generate further electrical signals indicative of a weight of ingredients in said bowl (42; 62) and display means for utilising said further electrical signals to provide a visual indication of said weight of ingredients; the drive system being disposed with lower components thereof suspended between said rails (71, 72), thereby permitting said bowl-supporting platform (41; 51) to be provided at a lower operational height, relative to a surface supporting said standing feet (73-76), than would have been possible were the entire drive system mounted above said rails.

2. An arrangement according to claim 1, wherein said drive system provides inner and outer coaxial drive outlets exposed at said platform (51) and operative at different speeds.

3. An arrangement according to claim 2, wherein the drive system comprises an active limb incorporating said electric drive motor (53), and a shaft, driven by the motor (53) and coupled to the inner drive outlet, to drive it at a selected speed.

4. An arrangement according to claim 3, wherein the drive system further includes a passive limb incorporating a rotary component (54), and wherein the active and passive limbs are mounted in fixed relationship to one another.

5. An arrangement according to claim 4, wherein the drive system further comprises a first speed reduction mechanism (55) to couple the motor-driven shaft to the rotary component (54) of the passive limb and a second speed reduction mechanism to couple the rotary component (54) to said outer drive outlet.

6. An arrangement according to claim 5, wherein both speed reduction mechanisms are belt driven.

7. An arrangement according to claim 5 or claim 6, wherein said speed reduction mechanisms are configured to provide identical speed reductions.

8. An arrangement according to any of claims 4 to 7, wherein the rotary component (54) comprises a further shaft, disposed substantially parallel to the driven shaft of the motor, and wherein both limbs of the system are rigidly mounted to, and supported by, a common framework of support members.

9. An arrangement according to any preceding claim, wherein respective load cells (81, 82) are deployed substantially centrally of each of said rails (71, 72) and are mounted atop the respective rails (71, 72) so as to sense the weight supported thereby.

10. An arrangement according to claim 9, wherein each of said load cells (81, 82) incorporates strategically deployed strain gauges comprised of resistors formed upon strain-sensitive regions of a beam body and connected into a bridge circuit; whereby the load can be measured by detecting the changes of resistance of the various resistors with variations in the loading applied to the beam.

11. An arrangement according to claim 10, wherein each of said load cells (81, 82) is formed with linked, transversely extending apertures through said beam body, said apertures being disposed to promote flexure of the load cell structure in the regions thereof at which the strain gauge resistors are deployed; some resistors being flexed in compression and some in extension to maximise the unbalance potentials exhibited by the bridge circuit, and hence the electrical output signals derivable from the cells.

12. An arrangement according to any of claims 9 to 11, wherein each load cell has associated therewith a respective load cell frame (83, 84) upon which the appliance is supported.

13. An arrangement according to claim 12, wherein each load cell is mounted directly to the underside of its respective load cell frame, and is mounted to the upper surface (in use) of its respective rail (71, 72) by means including a respective load cell stand (87, 88) of relatively small area.

14. An arrangement according to any preceding claim and intended to provide a weighing function only when the motor is stationary, wherein the display means is blanked, or provided with a suitable message or graphic, when the motor is energised.

15. An arrangement according to any of claims 1 to 13 capable of providing a weighing function whilst the motor is running, and including sensing means adapted to detect out-of-balance forces, and to generate compensatory electrical signals, indicative of the detected out-of-balance forces, and means utilising said compensatory electrical signals to perform electronic stabilisation processing upon the weighing signals.

16. An arrangement according to claim 15, wherein said sensing means comprises one or more piezoelectric sensors associated with one or more of the feet of the appliance.

17. An arrangement according to any preceding claim, wherein said display means includes an LCD display.

## Patentansprüche

1. Küchenmaschinenanordnung, umfassend ein Gehäuse (20; 50) mit einem Elektromotor und einem hierzu gehörenden Antriebssystem, das mit wenigstens einem Abtrieb auf einer eine Schüssel tragenden Plattform (41; 51) des besagten Gehäuses (20; 50) gekoppelt und in der Lage ist, ein in der besagten Schüssel (42; 62) befindliches Küchenmaschinenwerkzeug in eine Drehbewegung zu versetzen, bei der das besagte Gehäuse (20; 50) ein Paar von Querschienen (71; 72) dicht am Boden der Küchenmaschine aufweist, die deren gesamtes Gewicht tragen, wobei jede Schiene direkt an einem Paar Stützbeinen (73, 74, 75, 76) der Küchenmaschine montiert ist und wobei die Anordnung des Weiteren wenigstens eine auf jeder der besagten Schienen (71; 72) montierte Kraftmessdose (81; 82) aufweist und die Kraftmessdosen (81; 82) so angeordnet und konfiguriert sind, dass sie die Küchenmaschine abstützen und elektrische Signale erzeugen, die dem von ihnen gemessenem Gewicht der Zutaten in der besagten Schüssel (42; 62) entsprechen, sowie Anzeigemittel für die weitere Nutzung der besagten elektrischen Signale zur visuellen Darstellung des Gewichts der besagten Zutaten, wobei das Antriebssystem mit seinen unteren Teilen zwischen den besagten Schienen (71; 72) aufgehängt ist, so dass sich die besagte, die Schüssel tragende Plattform (51; 51) gegenüber einer die besagten Stützbeine (73-76) tragenden Fläche in einer geringeren Arbeitshöhe als der Höhe anordnen lässt, die möglich gewesen wäre, wäre das gesamte Antriebssystem über den besagten Schienen montiert.

2. Anordnung gemäß Anspruch 1, bei der das besagte Antriebssystem innere und äußere, koaxiale Abtriebe aufweist, die aus der besagte Plattform (51) hervorstehen und mit voneinander unterschiedlichen Drehzahlen arbeiten.

3. Anordnung gemäß Anspruch 2, bei der das Antriebssystem ein aktives Glied umfasst, das den besagten elektrischen Antriebsmotor (53) und eine von dem Motor (53) angetriebene Welle einbezieht und mit dem inneren Abtrieb gekoppelt ist, so dass dieser mit einer voreingestellten Drehzahl angetrieben wird.

4. Anordnung gemäß Anspruch 3, bei der das Antriebssystem des Weiteren ein passives Glied umfasst, das eine rotierende Komponente (54) aufweist, und bei der die aktiven und passiven Glieder in fester Lage zueinander montiert sind.

5. Anordnung gemäß Anspruch 4, bei der das Antriebssystem des Weiteren eine Drehzahluntersetzungsvorrichtung (55) zur Kopplung der motorangetriebenen Welle mit der rotierenden Komponente (54) des passiven Glieds und eine zweite Drehzahluntersetzungsvorrichtung zur Kopplung der rotierenden Komponente (54) an den besagten äußeren Abtrieb umfasst.

6. Anordnung gemäß Anspruch 5, bei der beide Drehzahluntersetzungsvorrichtungen einen Riemenabtrieb besitzen.

7. Anordnung gemäß Anspruch 5 oder Anspruch 6, bei der die besagten Drehzahluntersetzungsvorrichtungen für identische Drehzahlreduzierungswerte konfiguriert sind.

8. Anordnung gemäß einem der Ansprüche 4 bis 7, bei der die rotierende Komponente (54) eine weitere, im Wesentlichen parallel zur der angetriebenen Motorwelle verlaufende Welle einbezieht und bei der beide Glieder des Systems fest an einem gemeinsamen Rahmen aus Traggliedern montiert sind und von diesem abgestützt werden.

9. Anordnung gemäß einem beliebigen der vorhergehenden Ansprüche, bei der Kraftmessdosen (81; 82) jeweils im Wesentlichen mittig auf jeder der besagten Schienen (71, 72) angeordnet sind und oben auf den jeweiligen Schienen (71; 72) befestigt sind, so dass sie das von ihnen abgestützte Gewicht messen.

10. Anordnung gemäß Anspruch 9, bei der jede der besagten Kraftmessdosen (81; 82) strategisch angeordnete, aus Widerständen bestehende, auf den dehnungsbeanspruchten Regionen eines Balkenkörpers ausgebildete und über eine Brückenschaltung zusammengeschaltete Dehnungsmessstreifen aufweist, wobei die Belastung durch Erfassung der Änderung des Widerstands der verschiedenen Widerstände bei Änderung der Lastbeaufschlagung des Balkens gemessen werden kann.

11. Anordnung gemäß Anspruch 10, bei der jede der besagten Kraftmessdosen (81; 82) mit verbundenen, quer durch den besagten Balkenkörper verlaufenden Öffnungen ausgebildet ist, die besagten Öffnungen so angeordnet sind, dass sie eine Biegung der Kraftmessdosenkonstruktion in denjenigen ihrer Bereiche fördern, in der die Dehnungsmessstreifenwiderstände angeordnet sind; einige Widerstände werden dabei zur Maximierung der unausgeglichenen Spannungswerte der Brückenschaltung und damit der von den Kraftmessdosen ableitbaren elektrischen Ausgangssignale auf Druck und andere auf Zug beansprucht.

12. Anordnung gemäß einem beliebigen der Ansprüche 9 bis 11, bei der zu jeder Kraftmessdose ein entsprechender Kraftmessdosen-Rahmen (83; 84) gehört, auf dem sich das Gerät abstützt.

13. Anordnung gemäß Anspruch 12, bei der jede Kraftmessdose direkt an der Unterseite ihres zugehörigen Kraftmessdosen-Rahmens angebracht ist, und (im Gebrauch) unter Verwendung von Mitteln einschließlich eines zugehörigen Kraftmessdosenständers (87; 88) von relativ kleiner Oberfläche auf der oberen Fläche ihrer zugehörigen Schiene (71; 72) aufliegt.

14. Anordnung gemäß einem der vorhergehenden Ansprüche zur Ausführung einer Wägung nur dann, wenn der Motor stillsteht, und wobei keine Anzeige erfolgt oder nur eine angebrachte Meldung oder Grafik erscheint, wenn der Motor noch unter Strom steht.

15. Anordnung gemäß einem beliebigen der Ansprüche 1 bis 13, die die Ausführung einer Wägefunktion bei laufendem Motor erlaubt, einschließlich von Mitteln zur Messung von Ungleichgewichtskräften und zur Erzeugung von kompensierenden elektrischen Signalen, die für die gemessenen Ungleichgewichtskräfte indikativ sind, sowie von Mitteln zur Nutzung von solchen kompensierenden elektrischen Signalen für die elektronische Stabilisierung durch Verarbeitung der Gewichtssignale.

16. Anordnung gemäß Anspruch 15, bei der die besagten Mittel zur Messung einen oder mehrere , einem oder mehreren der Stützbeine des Geräts zugeordnete piezoelektrische Sensoren aufweisen.

17. Anordnung gemäß einem beliebigen der vorhergehenden Ansprüche, bei der die besagte Anzeige eine LCD-Anzeige einbezieht.

## Revendications

1. Agencement de robot culinaire comportant un carter (20 ; 50) contenant un moteur électrique et un système d'entraînement associé accouplé à au moins une sortie d'entraînement se trouvant sur une plate-forme de support de bol (41 ; 51) dudit carter (20 ; 50) et en mesure d'entraîner en rotation un outil de transformation d'aliments se trouvant à l'intérieur dudit bol (42 ; 62), dans lequel ledit carter (20 ; 50) comporte une paire de rails transversaux (71, 72) se trouvant à proximité de la base du robot culinaire et supportant l'intégralité de son poids, chaque rail (71, 72) étant monté directement sur une paire de pieds de support (73, 74, 75, 76) de l'agencement de robot culinaire, l'agencement comprenant par ailleurs au moins une cellule de charge (81, 82) montée sur chaque dit rail (71, 72), les cellules de charge (81, 82) étant disposées et configurées pour supporter le robot culinaire et générer des signaux électriques indiquant le poids détecté par celles-ci, un moyen de traitement permettant de traiter lesdits signaux pour générer d'autres signaux électriques indiquant un poids des ingrédients dans ledit bol (42 ; 62) et un moyen d'affichage permettant d'utiliser lesdits autres signaux électriques pour procurer une indication visuelle dudit poids des ingrédients ; le système d'entraînement étant disposé avec les composants bas de celui-ci suspendus entre lesdits rails (71, 72), permettant de ce fait à ladite plate-forme de support de bol (41 ; 51) d'être mise en oeuvre à une hauteur opérationnelle inférieure, par rapport à une surface supportant lesdits pieds de support (73 à 76), à ce qu'il n'aurait été autrement possible avec un montage du système d'entraînement entier au-dessus des rails.

2. Agencement selon la revendication 1, dans lequel ledit système d'entraînement met en oeuvre des sorties d'entraînement intérieure et extérieure exposées au niveau de ladite plate-forme (51) et fonctionnant à différentes vitesses.

3. Agencement selon la revendication 2, dans lequel le système d'entraînement comporte un membre actif incorporant ledit moteur d'entraînement électrique (53), et un arbre, entraîné par le moteur (53) et accouplé à la sortie d'entraînement intérieure, à des fins d'entraînement de celui-ci à une vitesse sélectionnée.

4. Agencement selon la revendication 3, dans lequel le système d'entraînement comprend par ailleurs un membre passif incorporant un composant rotatif (54), et dans lequel le membre actif et le membre passif sont montés selon une relation fixe l'un par rapport à l'autre.

5. Agencement selon la revendication 4, dans lequel le système d'entraînement comporte par ailleurs un premier mécanisme réducteur de vitesse (55) à des fins d'accouplement de l'arbre entraîné par moteur au composant rotatif (54) du membre passif et un second mécanisme réducteur de vitesse à des fins d'accouplement du composant rotatif (54) à ladite sortie d'entraînement extérieure.

6. Agencement selon la revendication 5, dans lequel les deux mécanismes réducteurs de vitesse sont entraînés par courroie.

7. Agencement selon la revendication 5 ou la revendication 6, dans lequel lesdits mécanisme réducteur de vitesse sont configurés pour fournir des réductions de vitesse identiques.

8. Agencement selon l'une quelconque des revendications 4 à 7, dans lequel le composant rotatif (54) comporte un autre arbre, disposé de manière sensiblement parallèle à l'arbre entraîné du moteur, et dans lequel les deux membres du système sont montés de manière rigide à un cadre commun d'éléments de support, et supportés par celui-ci.

9. Agencement selon l'une quelconque des revendications précédentes, dans lequel des cellules de charge respectives (81, 82) sont déployées de manière sensiblement centrale par rapport à chacun desdits rails (71, 72) et sont montées sur les rails respectifs (71, 72) de manière à détecter le poids supporté par ceux-ci.

10. Agencement selon la revendication 9, dans lequel chacune desdites cellules de charge (81, 82) incorpore des extensomètres déployés de manière stratégique constitués de résistances formées sur des régions sensibles aux contraintes d'un corps de fléau et raccordées en un circuit à pont; ce par quoi la charge peut être mesurée par la détection des changements de résistance des différentes résistances selon les variations de la charge exercée sur le fléau.

11. Agencement selon la revendication 10, dans lequel chacune desdites cellules de charge (81, 82) est formée avec des ouvertures reliées s'étendant dans le sens transversal au travers dudit corps de fléau, lesdites ouvertures étant disposées pour promouvoir la flexion de la structure de cellules de charge dans les régions de celles-ci où les résistances de l'extensomètre sont déployées ; certaines résistances étant fléchies en compression et certaines en extension pour maximaliser les potentiels de déséquilibre présentés par le circuit à pont, et ainsi les signaux de sortie électriques dérivés en provenance des cellules.

12. Agencement selon l'une quelconque des revendications 9 à 11, dans lequel chaque cellule de charge comporte, associé à celle-ci, un cadre de cellules de charge respectif (83, 84) sur lequel l'appareil est supporté.

13. Agencement selon la revendication 12, dans lequel chaque cellule de charge est montée directement sur la partie inférieure de son cadre de cellules de charge respectif, et est montée sur une surface supérieure (lors de l'utilisation) de son bras respectif (71, 72) par un moyen comprenant un support de cellules de charge respectif (87, 88) de surface relativement petite.

14. Agencement selon l'une quelconque des revendications précédentes et prévu pour la mise en oeuvre d'une fonction de pesage uniquement quand le moteur est fixe, dans lequel le moyen d'affichage est occulté, ou est mis en oeuvre avec un graphique ou un message approprié, quand le moteur est mis sous tension.

15. Agencement selon l'une quelconque des revendications 1 à 13, en mesure de mettre en oeuvre une fonction de pesage quand le moteur tourne, et comprenant un moyen de détection adapté pour détecter des forces de déséquilibre, et pour générer des signaux électriques de compensation, indiquant les forces de déséquilibre détectées, et un moyen utilisant lesdits signaux électriques de compensation pour effectuer un traitement de stabilisation électronique sur les signaux de pesage.

16. Agencement selon la revendication 15, dans lequel ledit moyen de détection comporte un ou plusieurs capteurs piézo-électriques associés à l'un ou plusieurs des pieds de l'appareil.

17. Agencement selon l'une quelconque des revendications précédentes, dans lequel ledit moyen d'affichage comprend un affichage à cristaux liquides.
